(19) **Europäisches Patentamt / European Patent Office / Office européen des brevets**

(11) **EP 3 785 882 A1**

(12) # EUROPEAN PATENT APPLICATION
published in accordance with Art. 153(4) EPC

(43) Date of publication:
**03.03.2021 Bulletin 2021/09**

(21) Application number: **19793389.8**

(22) Date of filing: **25.04.2019**

(51) Int Cl.:
**B29C 64/118** (2017.01) **B29C 64/259** (2017.01)
**B33Y 30/00** (2015.01) **B33Y 70/00** (2020.01)
**B33Y 80/00** (2015.01)

(86) International application number:
**PCT/JP2019/017812**

(87) International publication number:
**WO 2019/208741 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2018 JP 2018085201**

(71) Applicant: **Mitsubishi Chemical Corporation**
**Chiyoda-ku**
**Tokyo 100-8251 (JP)**

(72) Inventors:
• **HIRANO Akiko**
**Tokyo 100-8251 (JP)**
• **TANIGUCHI Kouichirou**
**Tokyo 100-8251 (JP)**
• **MUTA Takatoshi**
**Tokyo 100-8251 (JP)**

(74) Representative: **Vossius & Partner**
**Patentanwälte Rechtsanwälte mbB**
**Siebertstrasse 3**
**81675 München (DE)**

(54) **POLYAMIDE MATERIAL FOR 3D PRINTERS**

(57) The present invention relates to a polyamide-based 3D printer material containing a resin composition (C), in which the resin composition (C) contains a crystalline polyamide-based resin (A) and an amorphous polyamide-based resin (B), and a heat quantity of crystallization of the resin composition (C) in differential scanning calorimetry is 5 to 60 J/g.

*FIG. 1*

EP 3 785 882 A1

Printed by Jouve, 75001 PARIS (FR)

**Description**

TECHNICAL FIELD

The present invention relates to a polyamide-based 3D printer material, a fused deposition modeling type 3D printer filament, a resin molded body, a roll, and a cartridge for mounting a fused deposition modeling type 3D printer.

BACKGROUND ART

A thermal lamination deposition system by extrusion, namely, a system commonly referred to today as a three-dimensional printer (3D printer) (for example, a thermal lamination deposition system manufactured by Stratasys Inc., U.S.A.), is used to build a 3D object in layers based on a computer aided design (CAD) model by extruding a raw material having flowability from a nozzle part provided in an extrusion head. Among these, a fused deposition modeling method (FDM method) has been widely used because it is a simple system in which a raw material in the form of a filament composed of a thermoplastic resin is inserted into an extrusion head and while being fused by heating, continuously extruded from a nozzle part provided in the extrusion head onto the X-Y plane of a substrate within the chamber, the extruded resin is deposited on and fused to a resin laminate which has already been deposited, and as the resin cools, it solidifies and integrated. In the FDM method, a 3D object resembling a CAD model is built generally by repeating the extrusion step above with shifting of the nozzle position relative to the substrate upward into the Z-axis direction that is a direction perpendicular to the X-Y plane (Patent Literatures 1 and 2).

In the related art, as the raw material used for the DFM method, from the viewpoints of molding processability or flowability, a thermoplastic resin such as acrylonitrile-butadiene-styrene resin and polylactic acid has been suitably used in general (Patent Literatures 3 to 5).

On the other hand, in recent years, in addition to the above-mentioned general-purpose plastics, commercialization of engineering plastic filaments such as a polyamide-based resin has been studied. Because of having excellent heat resistance, chemical resistance, strength, etc., these engineering plastic filaments can be widely used for industrial applications such as modeling of products and manufacturing tools. However, among such polyamide-based resins, a commonly used filament using a crystalline polyamide-based resin having a high crystal melting temperature (melting point Tm, generally higher than 200°C) has a too fast crystallization rate, and thus has low printability such as low interlayer adhesiveness or warpage due to crystallization shrinkage. In contrast, a fused deposition modeling type 3D printer material containing 80 mass% or more of a polyamide copolymer having a crystal melting temperature (melting point Tm) of 200°C or lower (Patent Literature 6) is disclosed.

CITATION LIST

PATENT LITERATURE

Patent Literature 1: JP-T-2003-502184
Patent Literature 2: JP-T-2003-534159
Patent Literature 3: JP-T-2010-521339
Patent Literature 4: JP-A-2008-194968
Patent Literature 5: WO 2015/037574
Patent Literature 6: Japanese Patent No. 6265314

SUMMARY OF INVENTION

TECHNICAL PROBLEM

However, in Patent Literature 6, a specific polyamide copolymer is used, and there are problems in actual operation that raw material selection is limited, the raw material is expensive, or industrial productivity is lowered, for example, grades with desired properties may be difficult to obtain. Patent Literature 6 does not disclose a technical idea of adjusting thermal properties of the 3D printer material by using a resin composition containing a crystalline polyamide-based resin and an amorphous polyamide-based resin.

In addition, the crystalline polyamide-based resin alone having a low crystal melting temperature (melting point Tm), such as polyamide 12 has a low crystallization rate and is thus used for 3D printing with relatively slight problems of the interlayer adhesiveness and warpage. However, there are problems that the rigidity of the obtained molded body is low, the heat resistance is insufficient, and the applicable fields are thus limited.

Therefore, an object of the present invention is to provide a polyamide-based 3D printer material excellent in interlayer adhesiveness, excellent in printability with little warpage, and having good properties such as surface appearance and heat resistance, by blending relatively easily available raw materials.

Other objects of the present invention are to provide a resin molded body using the polyamide-based 3D printer material, a roll, and a cartridge for mounting a fused deposition modeling type 3D printer..

SOLUTION TO PROBLEM

As a result of intensive studies, the inventors of the present invention have found that the above-described objects can be achieved by using a resin composition which contains a crystalline polyamide-based resin and an amorphous polyamide-based resin and has specific thermal properties, and the present invention has been completed.

That is, the gist of the present invention resides in the following <1> to <12>.

<1> A polyamide-based 3D printer material, comprising: a resin composition (C), wherein the resin composition (C) contains a crystalline polyamide-based resin (A) and an amorphous polyamide-based resin (B), and a heat quantity of crystallization of the resin composition (C) in differential scanning calorimetry is from 5 to 60 J/g.

<2> The polyamide-based 3D printer material according to item <1>, wherein the heat quantity of crystallization of the resin composition (C) in differential scanning calorimetry is from 20 to 60 J/g.

<3> The polyamide-based 3D printer material according to item <1> or <2>, wherein the crystalline polyamide-based resin (A) comprises one or more selected from polyamide 6, polyamide 66, polyamide MXD6, polyamide 9T, polyamide 10T, and a copolymerized polyamide thereof.

<4> The polyamide-based 3D printer material according to any one of items <1> to <3>, wherein the heat quantity of crystallization of the amorphous polyamide-based resin (B) in differential scanning calorimetry is less than 5 J/g.

<5> The polyamide-based 3D printer material according to any one of items <1> to <4>, wherein a glass transition temperature (Tg) of the amorphous polyamide-based resin (B) is higher than a glass transition temperature (Tg) of the crystalline polyamide-based resin (A) by 30°C or more.

<6> The polyamide-based 3D printer material according to any one of items <1> to <5>, wherein the glass transition temperature (Tg) of the amorphous polyamide-based resin (B) is lower than 145°C.

<7> The polyamide-based 3D printer material according to any one of items <1> to <6>, wherein a heat quantity of crystal melting of the resin composition (C) in differential scanning calorimetry is from 10 to 60 J/g.

<8> The polyamide-based 3D printer material according to any one of items <1> to <7>, wherein a difference (Tm - Tc) between a crystal melting temperature (Tm) and a crystallization temperature (Tc) of the resin composition (C) in differential scanning calorimetry is from 30°C to 60°C.

<9> A fused deposition modeling type 3D printer filament, comprising: the polyamide-based 3D printer material according to any one of items <1> to <8>.

<10> A resin molded body formed by a 3D printer using the fused deposition modeling type 3D printer filament according to item <9>.

<11> A roll of the fused deposition modeling type 3D printer filament according to item <9>.

<12> A cartridge for mounting a fused deposition modeling type 3D printer, in which the roll according to item <11> is housed.

ADVANTAGEOUS EFFECTS OF INVENTION

According to the present invention, it is possible to provide a polyamide-based 3D printer material excellent in interlayer adhesiveness, excellent in printability with little warpage, and having good properties such as surface appearance and heat resistance. In addition, since it is possible to blend commercially available raw materials to adjust the above properties, it is expected that the degree of freedom in selecting raw materials and the industrial productivity can be improved.

BRIEF DESCRIPTION OF DRAWINGS

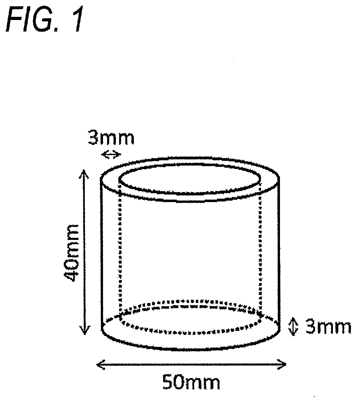

[Fig. 1] Fig. 1 is a schematic view showing an example of an embodiment of a resin molded body according to the present invention.

DESCRIPTION OF EMBODIMENTS

Hereinafter, embodiments for carrying out the present invention (hereinafter, referred to as "the present embodiment") will be described in detail. The below embodiment is merely an example for describing the present invention and the present invention is not intended to be limited to the embodiment. The present invention can be implemented with various modifications within the scope of the gist thereof.

[Polyamide-based 3D Printer Material]

The polyamide-based 3D printer material according to the present invention contains a resin composition (C) to be described later. The resin composition (C) contains a crystalline polyamide-based resin (A) to be described later and an amorphous polyamide-based resin (B) to be described later.

<Crystalline Polyamide-based Resin (A)>

Here, the crystalline polyamide-based resin (A) is not particularly limited, and specific examples thereof include the following. That is, polycaproamide (polyamide 6), polyhexamethylene adipamide (polyamide 66), polytetramethylene adipamide (polyamide 46), polyhexamethylene sebacamide (polyamide 610), polyhexamethylene dodecamide (polyamide 612), polyundecamethylene adipamide (polyamide 116), polybis(4-aminocyclohexyl)methandodecamide (polyamide PACM12), polybis(3-methyl-4aminocyclohexyl)methandodecamide (polyamide dimethyl PACM12), polynonamethylene terephthalamide (polyamide 9T), polydecamethylene terephthalamide (polyamide 10T), polyundecamethylene terephthalamide (polyamide 11T), polyundecamethylene hexahydroterephthalamide (polyamide 11T(H)), polyundecamide (polyamide 11), polydodecamide (polyamide 12), polytrimethylhexamethylene terephthalamide (polyamide TMDT), polyhexamethylene isophthalamide (polyamide 61), polyhexamethylene terephthal/isophthalamide (polyamide 6T/6I), polymeta-xylylene adipamide (polyamide MXD6), and a copolymer thereof. The crystalline polyamide-based resin (A) can be used alone or in combination of two or more thereof.

Among these, polyamide 6, polyamide 66, polyamide MXD6, polyamide 9T, polyamide 10T, and a copolymerized polyamide thereof are preferred from the viewpoints of moldability, surface appearance, and chemical resistance, polyamide 9T and polyamide 10T are more preferred from the viewpoints of high excellent heat resistance and mechanical strength, and polyamide 6 and polyamide 66 are more preferred from the viewpoint of balance between heat resistance and economic efficiency. Further, it is also practically preferable to use these crystalline polyamide-based resins as a mixture depending on the required properties such as impact resistance and molding processability.

The heat quantity of crystallization (ΔHc) of the crystalline polyamide-based resin (A) measured at a cooling rate of 10°C/min in differential scanning calorimetry is preferably 30 J/g or more and 100 J/g or less. Being within this range is preferred since it is easy to adjust the balance of heat resistance, chemical resistance, and mechanical strength even for the resin composition (C) by blending with the amorphous polyamide-based resin (B) to be described later. Therefore, the heat quantity of crystallization of the crystalline polyamide-based resin (A) is more preferably 40 J/g or more and 80 J/g or less.

Here, the heat quantity of crystallization (ΔHc) is a value measured using a differential scanning calorimeter (DSC) according to JIS K7122 when about 10 mg of a sample is heated from room temperature to a crystal melting temperature (melting point Tm) + 20°C at a heating rate of 10°C/min, held at the temperature for 1 minute, and then cooled to 30°C at a cooling rate of 10°C/min.

The crystal melting temperature (melting point Tm) of the crystalline polyamide-based resin (A) is not particularly limited, and is generally from 120°C to 320°C.

The crystal melting temperature (melting point Tm) being lower than 260°C is preferred since many commercially available printers can be used and power consumption can be prevented by setting the modeling temperature to be low. On the other hand, the crystal melting temperature (melting point Tm) being 260°C or higher is preferred since the heat resistance is easily ensured, and resistance is easily obtained in a solder reflow step for printed circuit boards. Therefore, the crystal melting temperature (melting point Tm) of the crystalline polyamide-based resin (A) is more preferably either of 120°C or higher and lower than 260°C, and, 260°C or higher and 320°C or lower, and more preferably either of 160°C or higher and lower than 230°C, and, 270°C or higher and 310°C or lower.

<Amorphous Polyamide-based Resin (B)>

Here, the amorphous polyamide-based resin (B) is not particularly limited, and the heat quantity of crystallization thereof measured at a cooling rate of 10°C/min in differential scanning calorimetry is preferably less than 5 J/g. In the present invention, the heat quantity of crystallization of the amorphous polyamide-based resin (B) is more preferably 0 J/g.

As a specific example, a polycondensate containing from 30 to 70 mol%, and more preferably from 40 to 60 mol% of isophthalic acid is preferred as a dicarboxylic acid component.

Examples of such a polycondensate include the following. That is, a polycondensate of isophthalic acid/α, co-linear aliphatic dicarboxylic acid having 4 to 20 carbon atoms/meta-xylylenediamine, a polycondensate of isophthalic acid/terephthalic acid/hexamethylenediamine, a polycondensate of isophthalic acid/terephthalic acid/hexamethylenediamine/bis(3-methyl-4-aminocyclohexyl)methane, a polycondensate of terephthalic acid/2,2,4-trimethylhexamethylenediamine/2,4,4-trimethylhexamethylenediamine, a polycondensate of isophthalic acid/bis(3-methyl-4-aminocyclohexyl)methane/ω-laurolactam, a polycondensate of isophthalic acid/2,2,4-trimethylhexamethylenediamine/2,4,4-trimethylhexamethylenediamine, a polycondensate of isophthalic acid/terephthalic acid/2,2,4-trimethylhexamethylenediamine/2,4,4-trimethylhexamethylenediamine, and a polycondensate of isophthalic acid/bis(3-methyl-4-aminocyclohexyl)methane/ω-laurolactam. In addition, those in which the benzene ring of the terephthalic acid component and/or the isophthalic acid component constituting these polycondensates is substituted with an alkyl group or a halogen atom are also included. These amorphous polyamide-based resins can be used in combination of two or more thereof.

Preferably, a mixture of a polycondensate of terephthalic acid/2,2,4-trimethylhexamethylenediamine/2,4,4-trimethylhexamethylenediamine with a polycondensate of isophthalic acid/$\alpha$, $\omega$-linear aliphatic dicarboxylic acid having 4 to 20 carbon atoms/meta-xylylenediamine, a polycondensate of isophthalic acid/terephthalic acid/hexamethylenediamine/bis(3-methyl-4-aminocyclohexyl)methane, a polycondensate of terephthalic acid/2,2,4-trimethylhexamethylenediamine/2,4,4-trimethylhexamethylenediamine, or a polycondensate of isophthalic acid/terephthalic acid/hexamethylenediamine/bis(3-methyl-4-aminocyclohexyl)methane is used.

In the present invention, a polycondensate of isophthalic acid/$\alpha$,$\omega$-linear aliphatic dicarboxylic acid having 4 to 20 carbon atoms/meta-xylylenediamine is particularly preferred from the viewpoints of miscibility with the crystalline polyamide-based resin, gas barrier properties, rigidity, heat resistance and low water absorption.

Here, the lower limit of the molar ratio of isophthalic acid to the total amount of isophthalic acid and $\alpha$,$\omega$-linear chain aliphatic dicarboxylic acid having 4 to 20 carbon atoms is preferably 40 mol% or more, and more preferably 45 mol% or more, from the viewpoint of making the heat quantity of crystallization within the above range. On the other hand, the upper limit thereof is preferably 60 mol% or less, and more preferably 55 mol% or less.

In the present invention, the glass transition temperature (Tg) of the amorphous polyamide-based resin (B) is not particularly limited, and is preferably 80°C or higher, more preferably 100°C or higher, and still more preferably 120°C or higher. On the other hand, the upper limit of the glass transition temperature is preferably 200°C or lower, more preferably 180°C or lower, still more preferably 160°C or lower, and most preferably 145°C or lower, from the viewpoint of preventing warpage during 3D printing of the resin molded body. The glass transition temperature of the amorphous polyamide-based resin (B) being within the above range is preferred since more excellent heat resistance, printability, and surface appearance can be obtained for the resin composition (C) by blending with the crystalline polyamide-based resin (A).

Here, the glass transition temperature (Tg) is a value measured using differential scanning calorimeter (DSC) according to JIS K7121 when about 10 mg of a sample is heated from room temperature to a crystal melting temperature (melting point Tm) + 20°C at a heating rate of 10°C/min, held at the temperature for 1 minute, then cooled to 30°C at a cooling rate of 10°C/min, and again heated to 280°C at a heating rate of 10°C/min.

In the present invention, the glass transition temperature (Tg) of the amorphous polyamide-based resin (B) is preferably higher than the glass transition temperature (Tg) of the crystalline polyamide-based resin (A) by 30°C or more. Here, as a rule of thumb, a normal crystalline polymer has a correlation of Tg ≈ (1/2)Tm to (2/3)Tm(K) (see color material, 68[1], P.45 (1995)). That is, it is known that when the crystalline polymer alone is used to increase the Tg, the Tm also increases, resulting in a decrease in flowability and a deterioration in the molding processability. Therefore, when the crystalline polyamide-based resin (A) is mixed with the amorphous polyamide-based resin (B) having a high Tg, it is possible to increase Tg while maintaining Tm to some extent for the composition. Therefore, the glass transition temperature (Tg) of the amorphous polyamide-based resin (B) is more preferably higher than the glass transition temperature (Tg) of the crystalline polyamide-based resin (A) by 50°C or more.

The relative viscosities of the crystalline polyamide-based resin (A) and the amorphous polyamide-based resin (B) for use in the present invention are not particularly limited. The relative viscosity measured using 96 mass% concentrated sulfuric acid as a solvent under conditions of a temperature of 25°C and a concentration of 1 g/dl is preferably in the range of from 1.5 to 5.0. This range is preferred since balance between take-off properties or mechanical strength and molding processability after melt-kneading is excellent. Therefore, the relative viscosity is more preferably in the range of from 2.0 to 4.0.

The crystalline polyamide-based resin (A) and the amorphous polyamide-based resin (B) for use in the present invention can be polymerized by a known method, and commercially available products thereof can be used.

Here, examples of the polymerization method include the following methods [1] to [6]. Further, a batch type or a continuous type can be appropriately selected.

[1] A method of heating an aqueous solution or an aqueous suspension of a dicarboxylic acid and a diamine salt or a mixture thereof to polymerize the obtained substance while maintaining a molten state (thermal melting polymerization method).

[2] A method of increasing the degree of polymerization while maintaining the solid state of the polyamide obtained by the thermal melting polymerization method at a temperature equal to or lower than the melting point (thermal melting polymerization/solid phase polymerization method).

[3] A method of heating an aqueous solution or an aqueous suspension of a dicarboxylic acid and a diamine salt or a mixture thereof, and melting again the precipitated prepolymer with an extruder such as a kneader to increase the degree of polymerization (prepolymer/extrusion polymerization method).

[4] A method of heating an aqueous solution or an aqueous suspension of a dicarboxylic acid and a diamine salt or a mixture thereof, and further increasing the degree of polymerization of the precipitated prepolymer at a temperature equal to or lower than the melting point of the polyamide while maintaining the solid state (prepolymer/solid phase polymerization method).

[5] A method of polymerizing a dicarboxylic acid and a diamine salt or a mixture thereof in one stage while maintaining the solid state (one-stage solid phase polymerization method).

[6] A method of polymerizing using a dicarboxylic acid halide equivalent to a dicarboxylic acid and diamine (solution method).

<Resin Composition (C)>

The resin composition (C) according to the present invention contains the crystalline polyamide-based resin (A) and the amorphous polyamide-based resin (B). In a mixture of the crystalline polyamide-based resin (A) and the amorphous polyamide-based resin (B), the relationship between Tg and Tm deviates from the above rule of thumb, so that it is possible to confirm that the resin composition (C) according to the present invention is different from a copolymer (one polymer). In addition, the mixture of the crystalline polyamide-based resin (A) and the amorphous polyamide-based resin (B) can be confirmed by structural analysis using a nuclear magnetic resonance apparatus (NMR) or by confirming the mixed state of the resin composition using an electron microscope.

Here, it is important that the heat quantity of crystallization ($\Delta Hc$) of the resin composition (C) measured at a cooling rate of 10°C/min in differential scanning calorimetry is from 5 to 60 J/g. The heat quantity of crystallization ($\Delta Hc$) being within this range is preferred since the balance between the printability for a 3D printer material and the heat resistance of the resin molded body which is 3D printed using the 3D printer material is excellent.

From the viewpoint of the heat resistance, the lower limit of the heat quantity of crystallization of the resin composition (C) is more preferably 10 J/g or more, still more preferably 20 J/g or more, and particularly preferably 35 J/g or more. On the other hand, from the viewpoint of printability (warpage prevention), the upper limit of the heat quantity of crystallization of the resin composition (C) is more preferably 58 J/g or less, still more preferably 55 J/g, and particularly preferably 50 J/g or more or less.

The heat quantity of crystal melting ($\Delta Hm$) of the resin composition (C) measured at a heating rate of 10°C/min in differential scanning calorimetry is preferably 10 J/g or more, more preferably 20 J/g or more, and still more preferably 30 J/g or more, from the viewpoint of the heat resistance of the 3D printed resin molded body. In addition, the heat quantity of crystal melting ($\Delta Hm$) is preferably 60 J/g or less, more preferably 58 J/g or less, and still more preferably 55 J/g or less, from the viewpoint of the printability for the 3D printer material.

In differential scanning calorimetry, when a plurality of crystallization temperatures (Tc) are expressed in the cooling process, the heat quantity of crystallization is their total value. In the present invention, one crystallization temperature is preferable. Further, when a plurality of crystal melting temperatures (Tm) are expressed in the heating process, the heat quantity of crystallization is thier total value.

The heat quantity of crystallization of the polyamide-based 3D printer material according to the present invention when heating is performed again at a heating rate of 10°C/min using differential scanning calorimeter (DSC) is preferably less than 10 J/g, more preferably less than 1 J/g, and still more preferably 0 J/g. That is, the polyamide-based 3D printer material according to the present invention preferably has no crystallization temperature in the reheating process at 10°C/min, that is, crystallization is sufficiently completed in the cooling process at 10°C/min. Thereby, the crystallization step by a heat treatment after 3D printing can be omitted. When crystallization is not completed during the 3D printing, it is preferable to promote crystallization by a heat treatment.

In the present invention, the heat quantity of crystallization is preferably adjusted by the mixing mass ratio of the crystalline polyamide-based resin (A) and the amorphous polyamide-based resin (B). Specifically, when the total amount of the crystalline polyamide-based resin (A) and the amorphous polyamide-based resin (B) is 100 parts by mass, it is preferable that the blending amount of the crystalline polyamide-based resin (A) is from 99 to 1 part by mass, and the blending amount of the amorphous polyamide-based resin (B) is from 1 to 99 parts by mass. The blending amount of the crystalline polyamide-based resin (A) is more preferably 40 parts by mass or more, still more preferably 50 parts by mass or more, and particularly preferably 55 parts by mass or more. On the other hand, the upper limit of the blending amount of the crystalline polyamide-based resin (A) is more preferably 95 parts by mass or less, still more preferably 90 parts by mass or less, and particularly preferably 85 parts by mass or less.

The difference (Tm - Tc) between the crystal melting temperature (melting point Tm) and the crystallization temperature (Tc) of the resin composition (C) in differential scanning calorimetry is preferably from 30°C to 90°C, and more preferably from 30°C to 60°C. The difference (Tm - Tc) being within this range is preferred since the crystallization rate is moderately slow, the interlayer adhesiveness is ensured when a resin molded body is prepared by a 3D printer, the warpage during the 3D printing is prevented, poor appearance in modeling such as cobwebbing is also prevented, and the printability is excellent. In addition, the difference (Tm - Tc) being within this range is preferred since the resin molded body which is 3D printed by a 3D printer is moderately crystallized, or the crystallization is easily completed by a heat treatment after the 3D printing, and the resin molded body is excellent in heat resistance. Therefore, the difference is more preferably from 35°C to 55°C, and particularly preferably from 38°C to 55°C.

Here, the crystallization temperature (Tc) is a value measured using differential scanning calorimeter (DSC) when being heated from room temperature to a crystal melting temperature (melting point Tm) + 20°C at a heating rate of 10°C/min, held at the temperature for 1 minute, and then cooled to 30°C at a cooling rate of 10°C/min. In differential scanning calorimetry, when a plurality of crystal melting temperatures (melting point Tm) and crystallization temperatures (Tc) are expressed, the difference (Tm - Tc) between the crystal melting temperature (melting point Tm) and the crystallization temperature (Tc) is calculated using the crystal melting temperature (melting point Tm) and the crystallization temperature (Tc) each having the largest amount of heat (heat quantity of crystal melting, heat quantity of crystallization).

The resin composition (C) according to the present invention may contain other components to the extent that the effects of the present invention are not impaired. Examples of the other components include a polymer other than polyamide-based resins, a heat-resistant agent, an ultraviolet absorber, a light stabilizer, an antioxidant, an antistatic agent, a lubricant, a slip agent, a crystal nucleating agent, a tackifier, a sealability improver, an antifogging agent, a release agent, a plasticizer, a pigment, a dye, a fragrance, a flame retardant, organic particles, inorganic particles, and a reinforcing material.

Here, specific examples of the polymer other than polyamide-based resins include an acrylonitrile-butadiene-styrene-based resin (ABS-based resin), polylactic acid (PLA resin), a polyurethane-based resin, a polyolefin-based resin, a polyester-based resin, a polystyrene-based resin, an acrylic resin, a polycarbonate-based resin, a polyvinyl-based chloride resin, a silicone-based resin, and various rubbers and elastomers.

In the present invention, it is preferable to use various rubbers and elastomers when imparting impact resistance and flexibility.

Here, specific examples of the organic particles include acrylic resin particles, melamine resin particles, silicone resin particles, and polystyrene resin particles.

Here, specific examples of the inorganic particles include silica, alumina, kaolin, titanium dioxide, calcium carbonate, magnesium carbonate, zinc carbonate, calcium stearate, magnesium stearate, and zinc stearate.

Here, specific examples of the reinforcing material include an inorganic filler and an inorganic fiber.

Specific examples of the inorganic filler include calcium carbonate, zinc carbonate, magnesium oxide, calcium silicate, sodium aluminate, calcium aluminate, sodium aluminosilicate, magnesium silicate, potassium titanate, glass balloons, glass flakes, glass powders, silicon carbide, silicon nitride, boron nitride, gypsum, calcined kaolin, zinc oxide, antimony trioxide, zeolite, hydrotalcite, wollastonite, silica, talc, metal powders, alumina, graphite, carbon black, and carbon nanotube.

Specific examples of the inorganic fiber include glass cut fibers, glass milled fibers, glass fibers, gypsum whiskers, metal fibers, metal whiskers, ceramic whiskers, carbon fibers, and cellulose nanofibers.

<Method for Producing Polyamide-based 3D Printer Material>

The polyamide-based 3D printer material according to the present invention is produced by using the resin composition (C) obtained by mixing the crystalline polyamide-based resin (A) with the amorphous polyamide-based resin (B). The mixing method for obtaining the composition is not particularly limited, however, known methods, for example, melt-kneading devices such as a single-screw extruder, a multi-screw extruder, a Banbury mixer, a kneader, or a roll mill can be used. In the present invention, it is preferable to use a same-direction twin-screw extruder from the viewpoints of dispersibility and miscibility of each component. The polyamide-based 3D printer material being excellent in dispersibility and miscibility is preferred since it is possible to prevent the unevenness of the extrusion amount when producing the filament to be described later, and to improve the accuracy of the filament diameter and circularity.

In the production of the polyamide-based 3D printer material according to the present invention, the melt-kneading device may be any one of an extruder, a Banbury mixer, a kneader, and a roll mill, as long as it is a device capable of melt-kneading the crystalline polyamide-based resin (A) and the amorphous polyamide-based resin (B), and is preferably an extruder from the viewpoints of enabling continuous production and being capable of adding various kinds of raw materials as separate feeds. When using an extruder, the ratio (L/D) of the screw length (L) to the screw diameter (D) of the extruder is not particularly limited, and is preferably from 20 to 80, more preferably from 25 to 70, still more preferably from 30 to 60, and particularly preferably from 35 to 50, from the viewpoint of the dispersibility of the crystalline polyamide-based resin (A) and the amorphous polyamide-based resin (B) with each other.

In the production of the polyamide-based 3D printer material according to the present invention, the extruder may be any of a single-screw extruder, a twin-screw extruder, a multi-screw extruder, or a composite-type extruder such as a twin-screw/single-screw composite-type extruder in which the single-screw extruder and the twin-screw extruder are combined, and is preferably a twin-screw extruder from the viewpoints of operability during operation, easy cleaning, being capable of improving the dispersibility of the crystalline polyamide-based resin (A) and the amorphous polyamide-based resin (B) with each other, and being capable of improving heat resistance and mechanical properties.

In the production of the polyamide-based 3D printer material according to the present invention, when a twin-screw extruder, a multi-screw extruder, or an extruder with two or more screws, such as a twin-screw/single-screw composite-type extruder, is used as the melt-kneading device, the screw structure may be either a non-meshing type or a meshing type, and a meshing type is preferred from the viewpoint of good dispersibility.

In the production of the polyamide-based 3D printer material according to the present invention, when a twin-screw extruder, a multi-screw extruder, or an extruder with two or more screws, such as a twin-screw/single-screw composite-type extruder, is used as the melt-kneading device, the rotation directions of respective screws may be the same direction or different directions.

In the production of the polyamide-based 3D printer material according to the present invention, the residence time is preferably from 30 to 300 seconds. Further, from the viewpoints of being capable of sufficiently kneading and dispersing the crystalline polyamide-based resin (A) and the amorphous polyamide-based resin (B) and preventing the decomposition of the polyamide-based resin, the residence time is more preferably from 45 to 250 seconds, still more preferably from 60 to 200 seconds, and particularly preferably from 60 to 180 seconds. Here, the residence time is the time from when the raw materials are charged and melt-kneaded until taking out as aresin composition.

In the production of the polyamide-based 3D printer material according to the present invention, the shear rate is preferably from 10 to 1,500 $sec^{-1}$. Further, from the viewpoints of sufficiently kneading and dispersing the crystalline polyamide-based resin (A) and the amorphous polyamide-based resin (B) and obtaining a stable and good color tone, the shear rate is more preferably from 30 to 1,300 $sec^{-1}$, still more preferably from 50 to 1,100 $see^{-1}$, even more preferably from 70 to 1,000 $sec^{-1}$, particularly preferably from 90 to 800 $sec^{-1}$, and most preferably from 110 to 600 $sec^{-1}$. Here, the shear rate is a velocity gradient per unit time. Generally, the shear rate when performing shear deformation between two surfaces can be obtained by the following equation.

$$\text{Shear rate} = \text{speed difference between two surfaces} \,/\, \text{distance between two surfaces}$$

In the production of the polyamide-based 3D printer material according to the present invention, the screw rotation speed of the melt-kneading device is not particularly limited, and is preferably from 10 to 500 rpm, more preferably from 30 to 350 rpm, and still more preferably from 50 to 300 rpm from the viewpoint of being capable of preventing a rise in resin temperature due to shear heat generation.

In the production of the polyamide-based 3D printer material according to the present invention, it is preferable to introduce an inert gas such as nitrogen, or to perform melt-kneading under reduced pressure conditions from the viewpoint of being capable of obtaining a resin composition having a stable and good color tone.

The content of the resin composition (C) in the polyamide-based 3D printer material according to the present invention is preferably from 50 to 100 mass%, and more preferably from 80 to 100 mass% from the viewpoints of the balance between the printability and the heat resistance, and the interlayer adhesiveness. The polyamide-based 3D printer material according to the present invention more preferably contains the resin composition (C).

The polyamide-based 3D printer material according to the present invention may contain components other than the resin composition (C) to the extent that the effects of the present invention are not impaired. Examples of the components other the resin composition (C) include a polymer other than polyamide-based resins, a heat-resistant agent, an ultraviolet absorber, a light stabilizer, an antioxidant, an antistatic agent, a lubricant, a slip agent, a crystal nucleating agent, a tackifier, a sealability improver, an antifogging agent, a release agent, a plasticizer, a pigment, a dye, a fragrance, a flame retardant, organic particles, inorganic particles, and a reinforcing material.

The water content of the polyamide-based 3D printer material according to the present invention is preferably 2.5 mass% or less. The water content is more preferably 2.0 mass% or less, still more preferably 1.5 mass% or less, and particularly preferably 1.0 mass% or less. The water content may be 0.3 mass% or more and may be 0.6 mass% or more. This range is preferred since foam generation and smoke generation are slight during extrusion and dimensional stability and mechanical strength are stable. This property is measured by the Karl Fischer method.

Therefore, the polyamide-based 3D printer material according to the present invention is dried and preferably stored in a moisture-proof packaging material (such as an aluminum bag, a vapor deposition film, or a glass container) after production, similar to the 3D printer filament to be described later.

[Fused Deposition Modeling Type 3D Printer Filament]

<Method for Producing Fused Deposition Modeling Type 3D Printer Filament>

The fused deposition modeling type 3D printer filament (hereinafter may be simply referred to as "a 3D printer filament") according to the present invention is produced using the above polyamide-based 3D printer material. The method for producing the 3D printer filament according to the present invention is not particularly limited and examples thereof include a method of molding the above polyamide-based 3D printer material by a known molding method such as extrusion molding, or a method of forming a filament as it is during the production of the resin composition. For example, when the 3D printer filament according to the present invention is obtained by extrusion molding, the temperature condition is appropriately adjusted depending on the flow properties and molding processability of the resin composition used, and is generally from 150°C to 350°C, and preferably from 170°C to 300°C.

<Physical Properties of Fused Deposition Modeling Type 3D Printer Filament>

The diameter of the 3D printer filament according to the present invention depends on specifications of a system used for molding the resin molded body with the fused deposition modeling method. The diameter is generally 1.0 mm or more, preferably 1.5 mm or more, more preferably 1.6 mm or more, and particularly preferably 1.7 mm or more, and, on the other hand, the upper limit thereof is generally 5.0 mm or less, preferably 4.0 mm or less, more preferably 3.5 mm or less, and particularly preferably 3.0 mm or less. Further, it is preferable that the accuracy of the diameter is within an error of $\pm 5\%$ with respect to an optional measurement point of the filament, from the viewpoint of the stability of raw material supply. Particularly, a standard deviation in diameter of the 3D printer filament according to the present invention preferably is 0.07 mm or less, and more preferably 0.06 mm or less.

The circularity of the 3D printer filament according to the present invention is preferably 0.93 or more, and particularly preferably 0.95 or more as measured by the method described in the section of Examples to be described later. The upper limit of the circularity is 1.0.

Thus, in the case of a 3D printer filament having a small standard deviation in diameter and a high circularity, discharge unevenness during molding can be prevented and a molded body excellent in appearance and surface properties can be stably produced. When using the above polyamide-based 3D printer material, a 3D printer filament satisfying such standard deviation and circularity can be produced relatively easily.

[Roll of Fused Deposition Modeling Type 3D Printer Filament and Cartridge for mounting Fused Deposition Modeling Type 3D Printer]

When producing a resin molded body by a 3D printer using the 3D printer filament according to the present invention, stable storage of the 3D printer filament and stable supply of the 3D printer filament to the 3D printer are required. Therefore, from the viewpoints of long-term storage, stable delivery, protection from environmental factors such as humidity, and twist prevention, it is preferable that the 3D printer filament according to the present invention is hermetically sealed and packaged in the form of a roll obtained by wounding the filament on a bobbin, or that the roll is housed in a cartridge for mounting a fused deposition modeling type 3D printer (hereinafter may simply referred to as "cartridge"). Examples of the cartridge include a cartridge having a structure where a desiccant or absorbent is used therein, in addition to a roll obtained by wounding the filament on a bobbin, and the portion except for at least an orifice part for delivering out the 3D printer filament is hermetically sealed.

Generally, a roll obtained by winding the 3D printer filament on a bobbin, or a cartridge including a roll is installed in or around the 3D printer, and the 3D printer filament is continuously introduced into the 3D printer from the cartridge during molding.

[Resin Molded Body]

<Method for Producing Resin Molded Body>

In the method for producing the resin molded body according to the present invention, a resin molded body is obtained by molding the 3D printer filament according to the present invention using a 3D printer. Examples of the molding method using the 3D printer include a fused deposition modeling method (FDM method), a powder sintering method, an inkjet method, and a stereolithography method (SLA method). Among these, the 3D printer filament according to the present invention can be preferably used in the fused deposition modeling method and the powder sintering method, and is particularly preferably used in the fused deposition modeling method. Hereinafter, the case of the fused deposition modeling method will be described as an example.

The 3D printer generally have a chamber, and the chamber is provided with a heatable substrate, an extrusion head installed in a gantry structure, a heating and melting vessel, and a raw material supply part including a filament guide, a filament cartridge installation part, or the like. In some 3D printers, an extrusion head and a heating and melting vessel are integrated together in the inside.

The extrusion head is disposed in the gantry structure and can thereby be optionally moved over the X-Y plane of the substrate. The substrate is a platform for building a target 3D object, a supporting material, etc. and preferably has a specification where adhesiveness to a laminated material is achieved by heating and keeping warm and the dimensional stability of the obtained molded body as a desired 3D object can be improved. In addition, in order to improve the adhesiveness to the laminated material, an adhesive glue may be coated to the substrate, or a sheet or the like having good adhesiveness to the laminated material may be attached to the substrate. Here, examples of the sheet good adhesiveness to the laminated material include a sheet having fine irregularities on the surface such as inorganic fiber sheets, and a sheet made of a resin with the same type as that of the laminated material. Generally, at least either one of the extrusion head and the substrate is movable in the Z-axis direction which is perpendicular to the X-Y plane.

The 3D printer filament is delivered from the raw material supply part, fed to the extrusion head with a pair of facing rollers or gears, heated and melted in the extrusion head, and extruded from the tip end of the nozzle. The extrusion head supplies the raw material onto the substrate, and laminatedly deposits it with changing the position in accordance with signals sent based on a CAD model. After the completion of this step, the laminated object is removed from the substrate and subjected to, if desired, separation of the supporting material, etc. or trimming of unnecessary portions, and a resin molded body as the desired 3D object can thereby be obtained.

Examples of the means for continuously supplying the raw material to the extrusion head include a method of delivering out and supplying a filament or a fiber, a method of supplying a powder or a liquid from a tank, etc. via a constant feeder, and a method of extruding and supplying a material obtained by plasticizing pellets or granules by means of an extruder, etc. Among these, from the viewpoints of step simplicity and supply stability, a method of delivering out and supplying a filament, i.e., a method of delivering out and supplying the above 3D printer filament according to the present invention, is most preferred.

In the case of supplying the filament to the 3D printer, the filament is generally engaged with a drive roll such as nip roll or gear roll and supplied to the extrusion head while being drawn out. Here, in order to stabilize the raw material supply by enhancing the gripping due to engagement of the filament with the drive roll, it is also preferable to transfer minute irregularities beforehand to the filament surface or incorporate an inorganic additive, a spreading agent, a pressure-sensitive adhesive, rubber, etc. for increasing the frictional resistance between the filament and the engaging part. When the filament has an uneven thickness, the filament may not be gripped by the engagement with the drive roll, and the drive roll may idle and the filament may not be supplied to the extrusion head.

For the resin composition (C) for use in the present invention, the temperature for obtaining flowability suitable for extrusion is generally about from 190°C to 300°C, which is a temperature that can be set by a general 3D printer. In the method for producing the resin molded body according to the present invention, the temperature of the heating extrusion head is generally 290°C or lower, preferably from 200°C to 280°C, and the substrate temperature is generally 120°C or lower, so that a resin molded body can be stably produced.

The temperature of the molten resin discharged from the extrusion head (discharge temperature) is preferably 180°C or higher, more preferably 190°C or higher, and is, on the other hand, preferably 300°C or lower, more preferably 290°C or lower, and still preferably 280°C or lower. The temperature of the molten resin being the above lower limit or more is preferred since it is preferable for extruding a resin having high heat resistance, and it becomes possible to discharge the resin at a high speed, which tends to improve 3D printing efficiency. On the other hand, the temperature of the molten resin being the above upper limit or less is preferred from the viewpoints of easily preventing problems such as thermal decomposition, burning, yellowing, smoke generation, odor emission, and sticking of the resin, and preventing deterioration in appearance caused by broken pieces of the molten resin thinly elongated, which is called cobwebbing, and bulks of the excess resin, which is called lump, adhering to the 3D printed product.

The molten resin discharged from the extrusion head is preferably discharged in a strand form having a diameter of from 0.01 to 1.0 mm, and more preferably from 0.02 to 0.5 mm. The molten resin being discharged in such a form is preferred since the reproducibility of the CAD model tends to be good.

In the case of producing the resin molded body by the 3D printer using the 3D printer filament, when making a molded body while laminating the strand-form resin discharged from the extrusion head, irregularities (such as streaks) may occur on the surface of the molded body due to insufficient adhesiveness between the previously discharged resin strand and the resin strand discharged thereon, or due to discharge unevenness. When such irregularities are present on the surface of the molded body, there are problems that not only the appearance may be deteriorated, but also the molded body may be easily damaged.

The 3D printer filament according to the present invention has good adhesiveness between the previously discharged resin strand and the resin strand discharged thereon. In addition, since the 3D printer filament according to the present invention has high circularity in diameter, discharge unevenness during molding is prevented, and a molded body excellent in appearance and surface properties can be stably produced.

When making a molded body while laminating the strand-form resin discharged from the extrusion head by the 3D printer, a step of stopping the discharge of the resin and then moving the nozzle to a laminated position in the next step is included. At this time, the resin may not be interrupted and a fine resin fiber is generated and remains on the surface of the molded body like cobwebbing. When such cobwebbing occurs, problems such as deterioration in the appearance of the molded body may occur.

In addition to a small standard deviation in diameter and a high circularity, the 3D printer filament according to the present invention has a moderate crystallization rate and a high breaking strain, so that it is possible to stably produce a molded body in which cobwebbing is prevented and which is excellent in appearance and surface properties.

When making a molded body while laminating the strand-form resin discharged from the extrusion head by the 3D printer, the resin may adhere to the nozzle part of the extrusion head, and the adhered resin may be colored by heat to form black foreign matters (black dots or black stripes). Then, such foreign matters are mixed into the molded body, causing problems such as deterioration in appearance and easy breakage of the molded body.

Since the 3D printer filament according to the present invention is excellent in heat resistance and is less likely to be colored by heat even when the resin is adhered to the nozzle part, a molded body having an excellent appearance can be stably produced.

In the resin molded body according to the present invention, depending on the intended use, crystallization may be promoted or completed by a heat treatment after 3D printing.

<Application of Resin Molded Body>

The resin molded body according to the present invention is excellent in surface appearance, heat resistance and durability. The application thereof is not particularly limited, and the resin molded body can be suitably used for applications, for example, stationery; toys; covers of cellular phones, smartphones, etc.; parts such as grip; school educational materials; repair parts for domestic electrical appliances or OA equipment; various parts for automobiles, motorcycles, bicycles, etc.; electric/electronic devices; materials for agriculture; materials for gardening; materials for fisheries; materials for civil engineering/construction; and medical supplies.

Examples

Hereinafter, the present invention will be described in more detail with reference to Examples, but the present invention is not limited thereto. Various measurement values and evaluations displayed in this description were performed as follows.

(1) Heat quantity of crystallization (ΔHc) and heat quantity of crystal melting (ΔHm)

The heat quantity of crystallization (ΔHc) (cooling process) and the heat quantity of crystal melting (ΔHm) (reheating process) were obtained from a thermogram obtained by measurement using differential scanning calorimeter (product name "Pyris1 DSC") manufactured by PerkinElmer Co., Ltd. according to JIS K7122 when about 10 mg of a sample was heated from room temperature to a crystal melting temperature (melting point Tm) + 20°C at a heating rate of 10°C/min, held at the temperature for 1 minute, and then cooled to 30°C at a cooling rate of 10°C/min. Each value was rounded off to the first decimal place.

(2) Crystal melting temperature (melting point Tm), crystallization temperature (Tc), and glass transition temperature (Tg)

The crystallization temperature (Tc, °C) (cooling process), the crystal melting temperature (melting point Tm, °C) (reheating process), and the glass transition temperature (Tg, °C) (reheating process) were obtained from respective thermograms obtained by measurement using differential scanning calorimeter (product name "Pyris1 DSC") manufactured by PerkinElmer Co., Ltd. according to JIS K7121 when about 10 mg of a sample was heated from room temperature to a crystal melting temperature (melting point Tm) + 20°C at a heating rate of 10°C/min, held at the temperature for 1 minute, then cooled to 30°C at a cooling rate of 10°C/min, and again heated to 280°C at a heating rate of 10°C/min. Each value was rounded off to the first decimal place.

(3) Evaluation on 3D printer filament

<Circularity of diameter>

The obtained filament was measured at 10 points at an interval of 3 cm to determine the major axis and the minor axis with a caliper, and the ratio of minor axis/major axis at each measurement point was determined. The average value of the ratios of the minor axis/major axis at the 10 measured points was defined as the circularity. The closer the ratio is to 1.0, the closer the filament cross section is to a perfect circle.

(4) Evaluation on resin molded body

<Warpage>

As an evaluation sample, a dumbbell-shaped sample having a sample length of 75 mm, a width of 10 mm, and a thickness of 5 mm was produced according to the production conditions described in Examples to be described later. The evaluation sample was produced from the filaments described in Examples and Comparative Examples to be described later using a 3D printer with the thickness direction of the sample being the Z-axis direction (laminating direction).
After producing the evaluation sample, the distance from the four corners of the sample and a horizontal plane when the sample was removed from the 3D printing substrate and placed on the horizontal plane was measured, and the average value of the obtained values was taken as the amount of warpage.
The sample that could be produced and had an amount of warpage of less than 0.1 mm was evaluated as "AA", the sample that could be produced and had an amount of warpage of 0.1 mm or more and less than 2 mm was evaluated as "A", and the sample that could be produced but had a warpage of 2 mm or more, or the sample that had a large amount of warpage and was peeled off from the substrate during the production and could not be produced was evaluated as "B".

<Interlayer adhesiveness>

The interlayer adhesiveness was evaluated by measuring the tensile strength according to JIS K7161. As an evaluation sample, a dumbbell-shaped sample having a sample length of 75 mm, a width of 10 mm, and a thickness of 5 mm was produced according to the production conditions described in Examples to be described later. The evaluation sample was produced from the filaments described in Examples and Comparative Examples to be described later using a 3D printer with the length direction of the sample being the Z-axis direction (laminating direction).
The case where the tensile strength under an initial distance between chucks of 45 mm, a speed of 50 mm/min, and 23°C was 10 MPa or more was evaluated as "AA", the case where the tensile strength was 1 MPa or more and less than 10 MPa was evaluated as "A", and the case where the tensile strength was less than 1 MPa or the testable dumbbell-shaped sample was not obtained was evaluated as "B".

<Heat resistance>

As an evaluation sample, a cup-like resin molded body (3D printed product) having an opening at the upper part shown in Fig. 1 was produced according to the production conditions described in Examples to be described later. The evaluation sample was produced from the filaments described in Examples and Comparative Examples to be described later using a 3D printer with the height direction of the cup-like resin molded body being the Z-axis direction (laminating direction).
In order to promote crystallization, the produced resin molded body was subjected to a heat treatment at a temperature of glass transition temperature (Tg) + 30°C for 12 hours. Thereafter, the resin molded body was allowed to stand with the opening thereof facing upward, a load of 0.01 MPa was applied from the top for 1 minute at a temperature of crystal melting temperature (melting point Tm) - 30°C, and the height after load application was measured. Then, the case where the height after load application was 95% or more of the height before load application (40 mm) was evaluated as "A", and the case where the height after load application was less than 95% of the height before load application was evaluated as "B".

<Comprehensive evaluation>

The comprehensive evaluation on the resin molded body was performed according to the following criteria.

A: the evaluations on warpage, interlayer adhesiveness and heat resistance were all "A" or "AA".
B: any one or more of the evaluations on warpage, interlayer adhesiveness and heat resistance were "B".

The raw materials used in Examples and Comparative Examples are described below.

<Crystalline polyamide-based resin (A)>

Crystalline polyamide-based resin (A-1): polyamide 6 (manufactured by Toray Industries Inc., product name: AMILAN CM1021FS, density: 1.13 g/cm$^3$, Tg: 50°C, Tm: 222.2°C, Tc: 186.6°C, ΔHc: 66.1 J/g, relative viscosity: 3.4)
Crystalline polyamide-based resin (A-2): polyamide 66 (manufactured by Toray Industries Inc., product name: AMILAN CM3001-N, density: 1.13 g/cm$^3$, Tg: 58°C, Tm: 264.96°C, Tc: 231.23°C, ΔHc: 68.2 J/g, relative viscosity: 2.8)

<Amorphous polyamide-based resin (B)>

Amorphous polyamide-based resin (B-1): (manufactured by Mitsubishi Gas Chemical Company, Inc., product name: MX Nylon #7501, density: 1.21 g/cm$^3$, Tg: 121.6°C, amorphous (ΔHc: 0 J/g), diamine component: 100 mol% of metaxylylenediamine, dicarboxylic acid component: 50 mol% of adipic acid and 50 mol% of isophthalic acid)
Amorphous polyamide-based resin (B-2): (manufactured by Daicel-Evonik Ltd., product name: TROGAMID T5000, density: 1.12 g/cm$^3$, Tg: 150°C, amorphous (ΔHc: 0 J/g), diamine component: 100 mol% of 2,2,4-trimethylhexamethylenediamine, dicarboxylic acid component: 100 mol% of terephthalic acid)
Amorphous polyamide-based resin (B-3): (manufactured by DuPont Company, product name: Selar PA3426, density: 1.19 g/cm$^3$, Tg: 123°C, amorphous (ΔHc: 0 J/g), diamine component: 100 mol% of hexamethylenediamine, dicarboxylic acid component: 70 mol% of isophthalic acid and 30 mol% of terephthalic acid)

(Example 1)

<Production of resin composition (C) and polyamide-based 3D printer material>

The crystalline polyamide-based resin (A-1) and the amorphous polyamide-based resin (B-1) were previously dried at 90°C for 24 hours to make the water content of each raw material 0.1 mass% or less. 80 parts by mass of the crystalline polyamide-based resin (A-1) and 20 parts by mass of the amorphous polyamide-based resin (B-1) were mixed, and a resin composition (C-1) was produced using a same-direction twin-screw kneader (having a diameter of 26 mm) (manufactured by LabTech Engineering, product name: LTS26-40, L/D = 40 mm), to obtain a polyamide-based 3D printer material. The kneading conditions included a cylinder setting temperature of 250°C, a rotation speed of 150 rpm, and a discharge rate of 15 kg/h. Various evaluations were performed on the obtained 3D printer material. The results are shown in Table 1.

<Production of filament>

The resin composition (C-1) obtained above was introduced into a same-direction twin-screw extruder (having a diameter of 15 mm) to produce a filament. The kneading conditions included a set temperature of 250°C and a discharge rate of 1.0 kg/h. The resin composition was extruded from a die diameter of 3 mm, and was drawn out at 5 m/min by a drawing-out device through a water tank of 40°C. The cross-sectional diameter of the obtained filaments ranged from 1.65 mm to 1.90 mm. Various evaluations were performed on the obtained filaments. The results are shown in Table 1.

<Production of resin molded body>

The produced filament was dried previously at 90°C for 24 hours such that the water content was 0.1 mass% or less. Various evaluation samples were produced as a 3D object by using Pharaoh XD20 (product name) manufactured by Mass Portal SIA as a fused deposition modeling type extrusion lamination deposition system.
The production conditions included a printing speed of 60 mm/s, an internal filling rate of 100%, a 3D printing atmosphere temperature of 40°C, a substrate temperature of 60°C, and a discharge temperature of 250°C. The molten resin was discharged from the extrusion head in the form of strands having a diameter of 0.4 mm. Warpage, interlayer adhesiveness and heat resistance of the obtained resin molded body were evaluated. The results are shown in Table 1.

(Example 2)

A resin composition, a filament, and a resin molded body were produced in the same manner as in Example 1 except that the blending amount of the crystalline polyamide-based resin (A-1) was changed to 65 parts by mass, and the blending amount of the amorphous polyamide-based resin (B-1) was changed to 35 parts by mass in the production of the resin composition (C). Then, the resin composition, the filament, and the resin molded body were evaluated in the same manner as in Example 1. The evaluation results are shown in Table 1.

(Example 3)

A resin composition, a filament, and a resin molded body were produced in the same manner as in Example 1 except that the crystalline polyamide-based resin (A-1) was changed to the crystalline polyamide-based resin (A-2), and the kneading temperature during the production of the resin composition and the filament and the discharge temperature during the production of the resin molded body were 280°C in the production of the resin composition (C). Then, the resin composition, the filament, and the resin molded body were evaluated in the same manner as in Example 1. The evaluation results are shown in Table 1.

(Example 4)

A resin composition, a filament, and a resin molded body were produced in the same manner as in Example 1 except that the blending amount of the crystalline polyamide-based resin (A-1) was changed to 60 parts by mass, the amorphous polyamide-based resin (B-1) was changed to the amorphous polyamide-based resin (B-2), and the blending amount thereof was 40 parts by mass in the production of the resin composition (C). Then, the resin composition, the filament, and the resin molded body were evaluated in the same manner as in Example 1. The evaluation results are shown in Table 1.

(Example 5)

A resin composition, a filament, and a resin molded body were produced in the same manner as in Example 2 except that the 3D printing atmosphere temperature was changed to 50°C and the substrate temperature was changed to 90°C in the production of the resin composition. Then, the resin composition, the filament, and the resin molded body were evaluated in the same manner as in Example 2. The evaluation results are shown in Table 1.

(Example 6)

A resin composition, a filament, and a resin molded body were produced in the same manner as in Example 1 except that the blending amount of the crystalline polyamide-based resin (A-1) was changed to 60 parts by mass, the amorphous polyamide-based resin (B-1) was changed to the amorphous polyamide-based resin (B-3), and the blending amount thereof was 40 parts by mass in the production of the resin composition (C). Then, the resin composition, the filament, and the resin molded body were evaluated in the same manner as in Example 1. The evaluation results are shown in Table 1.

(Comparative Example 1)

A filament and a resin molded body were produced under conditions same as those of Example 1 by using only the crystalline polyamide-based resin (A-1) as a raw material without using the resin composition (C). Then, the crystalline polyamide-based resin (A-1), the filament, and the resin molded body were evaluated in the same manner as in Example 1. In Comparative Example 1, since a large warpage occurred during the production of the resin molded body and the 3D printing could be completed only about 10% of the whole, the evaluations on interlayer adhesiveness and heat resistance were performed using this 3D printed product. The evaluation results are shown in Table 1.

(Comparative Example 2)

A filament and a resin molded body were produced under conditions same as those of Example 3 by using only the crystalline polyamide-based resin (A-2) as a raw material without using the resin composition (C). Then, the crystalline polyamide-based resin (A-2), the filament, and the resin molded body were evaluated in the same manner as in Example 1. In Comparative Example 2, since a large warpage occurred during the production of the resin molded body and the modeling could be completed only about 10% of the whole, the evaluations on interlayer adhesiveness and heat resistance were performed using this modeled product. The evaluation results are shown in Table 1.

(Comparative Example 3)

A resin composition, a filament, and a resin molded body were produced in the same manner as in Example 1 except that the blending amount of the crystalline polyamide-based resin (A-1) was changed to 35 parts by mass, and the blending amount of the amorphous polyamide-based resin (B-1) was changed to 65 parts by mass in the production of the resin composition (C). Then, the resin composition, the filament, and the resin molded body were evaluated in the same manner as in Example 1. The evaluation results are shown in Table 1.

[Table 1]

| | | Example | | | | | | Comparative Example | | |
|---|---|---|---|---|---|---|---|---|---|---|
| | | 1 | 2 | 3 | 4 | 5 | 6 | 1 | 2 | 3 |
| Crystalline polyamide-based resin (A) (part by mass) | A-1 | 80 | 65 | - | 60 | 65 | 60 | 100 | - | 35 |
| | A-2 | - | - | 80 | - | - | - | - | 100 | - |
| Amorphous polyamide-based resin (B) (part by mass) | B-1 | 20 | 35 | 20 | - | 35 | - | - | - | 65 |
| | B-2 | - | - | - | 40 | - | - | - | - | - |
| | B-3 | - | - | - | - | - | 40 | - | - | - |
| Evaluation on 3D printer material | $\triangle$Hc (J/g) | 52.3 | 37.6 | 49.3 | 32.1 | 37.6 | 17.2 | 66.1 | 63.6 | 4.5 |
| | $\triangle$Hm (J/g) | 56.0 | 36.2 | 57.0 | 32.4 | 36.2 | 32.7 | 71.6 | 74.1 | 9.8 |
| | Tm - Tc (°C) | 38.8 | 47.7 | 35.5 | 55.9 | 47.7 | 85.0 | 35.6 | 31.0 | 55.6 |
| | Tm (°C) | 222.6 | 221.9 | 264.3 | 213.0 | 221.9 | 213.0 | 223.4 | 264.3 | 218.7 |
| | Tg(°C) | 66.0 | 80.0 | 77.9 | 91.3 | 80.0 | 75.8 | 50.6 | 58.2 | 96.3 |
| Evaluation on 3D printer filament | Circularity | 0.97 | 0.97 | 0.97 | 0.97 | 0.97 | 0.97 | 0.97 | 0.97 | 0.97 |
| Evaluation on resin molded body | Warpage (mm) | A (1.6) | AA (< 0.1) | A (1.7) | A (1.5) | A (0.8) | AA (<0.1) | B (Cannot be produced) | B (Cannot be produced) | A (1.3) |
| | Interlayer adhesiveness (MPa) | A (6) | AA (12) | A (7) | AA (13) | AA (15) | AA (16) | B (Cannot be tested) | B (Cannot be tested) | AA (30) |
| | Heat resistance (%) | A (100) | A (100) | A (100) | A (100) | A (100) | A (100) | A (100) | A (100) | B (80) |
| Comprehensive evaluation | | A | A | A | A | A | A | B | B | B |

As can be confirmed from Table 1, the polyamide-based 3D printer material containing the resin composition (C) having the specific thermal properties defined in the present invention is excellent in all evaluations on the 3D printer filament and the resin molded body (Examples 1 to 6).

In contrast, it can be confirmed that those that do not satisfy the elements specified in the present invention are poor in one or more of warpage, interlayer adhesiveness, and heat resistance in the evaluation on the resin molded body (Comparative Examples 1 to 3). Specifically, it can be confirmed that when the heat quantity of crystallization ($\Delta$Hc) more than the range specified in the present invention, warpage and interlayer adhesiveness are poor (Comparative Examples 1 and 2), and on the other hand, when the heat quantity of crystallization ($\Delta$Hc) is less than the range specified in the present invention, warpage and interlayer adhesiveness are good, but the heat resistance is poor (Comparative Example 3).

Although the present invention has been described in detail and with reference to particular embodiments, it will be apparent to those skilled in the art that various changes and modifications can be made without departing from the spirit and scope of the invention. The present application is based on a Japanese Patent Application (Japanese Patent Application No. 2018-85201) filed on April 26, 2018, contents of which are incorporated herein by reference.

## Claims

1. A polyamide-based 3D printer material, comprising:

   a resin composition (C), wherein
   the resin composition (C) contains a crystalline polyamide-based resin (A) and an amorphous polyamide-based resin (B), and a heat quantity of crystallization of the resin composition (C) in differential scanning calorimetry is from 5 to 60 J/g.

2. The polyamide-based 3D printer material according to claim 1, wherein the heat quantity of crystallization of the resin composition (C) in differential scanning calorimetry is from 20 to 60 J/g.

3. The polyamide-based 3D printer material according to claim 1 or 2, wherein the crystalline polyamide-based resin (A) comprises one or more selected from polyamide 6, polyamide 66, polyamide MXD6, polyamide 9T, polyamide 10T, and a copolymerized polyamide thereof.

4. The polyamide-based 3D printer material according to any one of claims 1 to 3, wherein the heat quantity of crystallization of the amorphous polyamide-based resin (B) in differential scanning calorimetry is less than 5 J/g.

5. The polyamide-based 3D printer material according to any one of claims 1 to 4, wherein a glass transition temperature (Tg) of the amorphous polyamide-based resin (B) is higher than a glass transition temperature (Tg) of the crystalline polyamide-based resin (A) by 30°C or more.

6. The polyamide-based 3D printer material according to any one of claims 1 to 5, wherein the glass transition temperature (Tg) of the amorphous polyamide-based resin (B) is lower than 145°C.

7. The polyamide-based 3D printer material according to any one of claims 1 to 6, wherein a heat quantity of crystal melting of the resin composition (C) in differential scanning calorimetry is from 10 to 60 J/g.

8. The polyamide-based 3D printer material according to any one of claims 1 to 7, wherein a difference (Tm - Tc) between a crystal melting temperature (Tm) and a crystallization temperature (Tc) of the resin composition (C) in differential scanning calorimetry is from 30°C to 60°C.

9. A fused deposition modeling type 3D printer filament, comprising: the polyamide-based 3D printer material according to any one of claims 1 to 8.

10. A resin molded body formed by a 3D printer using the fused deposition modeling type 3D printer filament according to claim 9.

11. A roll of the fused deposition modeling type 3D printer filament according to claim 9.

12. A cartridge for mounting a fused deposition modeling type 3D printer, in which the roll according to claim 11 is housed.

FIG. 1

# EP 3 785 882 A1

<table>
<tr><td colspan="2">INTERNATIONAL SEARCH REPORT</td><td colspan="2">International application No.<br>PCT/JP2019/017812</td></tr>
</table>

**A. CLASSIFICATION OF SUBJECT MATTER**

Int.Cl. B29C64/118(2017.01)i, B29C64/259(2017.01)i, B33Y30/00(2015.01)i,
B33Y70/00(2015.01)i, B33Y80/00(2015.01)i

According to International Patent Classification (IPC) or to both national classification and IPC

**B. FIELDS SEARCHED**

Minimum documentation searched (classification system followed by classification symbols)

Int.Cl. B29C64/00-64/40, B33Y30/00, B33Y70/00, B33Y80/00, C08G69/00-
69/50

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-505409 A (STRATASYS, INC.) 25 February 2016, claims, paragraphs [0010], [0045]-[0085], [0125]-[0134], fig. 1, 4, 7-11 & US 2014/0141166 A1, claims, paragraphs [0011], [0066]-[0098], [0137]-[0146], fig. 1, 4, 7-11 | 1-12 |
| X | JP 2017-502852 A (STRATASYS, INC.) 26 January 2017, claims, paragraphs [0011], [0049]-[0087], [0114]-[0117], fig. 1, 4 & WO 2015/081009 A1, claims, paragraphs [0011], [0056]-[0094], [0119]-[0122], fig. 1, 4 | 1-12 |
| A | WO 2017/153586 A1 (DSM IP ASSETS B. V.) 14 September 2017, entire text & US 2019/0062577 A1, entire text | 1-12 |
| A | JP 6265314 B1 (UBE INDUSTRIES, LTD.) 24 January 2018, entire text & EP 3479998 A1, entire text | 1-12 |

☐ Further documents are listed in the continuation of Box C. ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>09 July 2019 (09.07.2019) | Date of mailing of the international search report<br>16 July 2019 (16.07.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003502184 T
- JP 2003534159 T
- JP 2010521339 T
- JP 2008194968 A
- WO 2015037574 A
- JP 6265314 B
- JP 2018085201 A